# EUROPÄISCHE PATENTANMELDUNG

(11) **EP 4 516 618 A1**
(43) Veröffentlichungstag der Anmeldung: **05.03.2025**
(21) Anmeldenummer: 24191747.5
(22) Anmeldetag: 30.07.2024
(51) Int. Cl.: B61D 23/02, B61K 13/04, B60R 3/02

(54) **ZUSTIEGEINRICHTUNG MIT AUSSERBETRIEBNAHMEEINHEIT**

(30) Priorität: 31.08.2023 DE 202023104989 U
(71) Anmelder: Bode - Die Tür GmbH, 34123 Kassel (DE)
(72) Erfinder: Theis, Christoph, 34537 Bad Wildungen (DE); Kunzemann, Torben, 34311 Naumburg (DE); Cimmino, Marco, 37139 Adelebsen (DE); Arend, Ulrich, 34576 Dickershausen (DE)
(74) Vertreter: Patentanwälte Bauer Vorberg Kayser

(57) **Zusammenfassung**

Die vorliegende Erfindung betrifft eine Zustiegeinrichtung für ein Fahrzeug, umfassend eine Trittplatte (22) und einer mit der Trittplatte (22) wirkverbundenen Ausschubeinheit (24), in der die Trittplatte (22) entlang einer Verschiebeachse (V) verschiebbar ist.

Die Zustiegeinrichtung weist auf
- eine ortsfest am Fahrzeug befestigte Ausserbetriebnahmeeinheit (28) mit einem sichelförmigen drehbaren Hebel (30), der von einer Betriebsposition in eine Ausserbetriebposition und zurück drehbar ist,
- einen an der Trittplatte (22) angeordneten Verrieglungsbolzen (40), der dann von dem sichelförmigen drehbaren Hebel (30) hintergriffen und aufgrund einer weiteren Drehung des sichelförmigen drehbaren Hebels (30) entlang der Verschiebeachse (V) unter Ausführung einer Verschiebebewegung von einer ausgefahrenen Stellung hin zu einer eingefahrenen Stellung bewegt werden kann, wenn dieser ausrechend weit in die Trittplattenanordnung (20) eingefahren ist.

Der sichelförmige drehbare Hebel (30) befindet sich in der Ausserbetriebposition befindet, wenn die Trittplatte (22) vollständig in die Trittplattenanordnung (20) eingefahren ist. Die Trittplatte (22) ist in der Ausserbetriebposition durch den Hebel (30) formschlüssig gegen ein Verschieben in Ausfahrrichtung des Schiebetritts gesichert und der Hebel (30) ist über einen von außen zugänglichen Kontaktbereich manuell verdrehbar.

## Beschreibung

Die vorliegende Erfindung betrifft eine Zustiegeinrichtung für ein Fahrzeug, insbesondere für ein Schienenfahrzeug, umfassend eine linearverschiebbar angeordnete Trittplattenanordnung mit einer Trittplatte und einer mit der Trittplatte wirkverbundenen Ausschubeinheit, in der die Trittplatte entlang einer Verschiebeachse unter Ausführung einer Verschiebebewegung von einer eingefahrenen Stellung hin zu einer ausgefahrenen Stellung und umgekehrt verschiebbar ist.

Bei Fahrzeugen unterschiedlicher Art, insbesondere jedoch bei Fahrzeugen des öffentlichen Personentransports, wird auf Zustiegeinrichtungen der eingangs beschriebenen oder ähnlicher Bauart zurückgegriffen. Unter einem "Fahrzeug" kann vorliegend insbesondere ein radgebundenes oder ein schienengebundenes Fahrzeug zu verstehen sein. Bei radgebundenen Fahrzeugen kann es sich im vorliegenden Kontext insbesondere um Transportfahrzeuge für den Personenverkehr handeln, beispielsweise um Busfahrzeuge. Bei schienengebundenen Fahrzeugen kann es sich im vorliegenden Sachzusammenhang ebenfalls um Transportfahrzeuge für den Personenverkehr handeln, beispielsweise um Straßenbahnen, S-Bahnen, Züge (Regionalzüge, Fernzüge), U-Bahnen, Trams, etc. Grundsätzlich können Zustiegeinrichtungen jedoch bei Fahrzeugen jeglicher Art eingesetzt werden, bei welchen beim Ein- oder Ausstieg von Personen ein Höhenunterschied oder ein Spalt zwischen einem Haltesteig und einer Trittfläche im Innenraum des Fahrzeugs überwunden werden muss. Eine solche Situation kann beispielsweise auch beim Halten eines Flugzeugs an einem Gate bzw. Haltesteig des Gates auftreten, weshalb auch bei Flugzeugen Zustiegeinrichtungen zum Einsatz kommen können.

Entsprechend dienen Zustiegeinrichtungen der Erleichterung des Ein- und Ausstiegs in ein Fahrzeug vorbeschriebener Art. Aus dem Stand der Technik sind Schiebetritteinrichtungen und Klapptritteinrichtungen wohlbekannt.

Schiebetritteinrichtungen beruhen darauf, dass eine Trittplatte zwischen einer eingefahrenen und einer ausgefahrenen Stellung hin- und herbewegt wird, insbesondere entlang einer sich in Fahrzeugquerrichtung erstreckenden Verschiebeachse. In der ausgefahrenen Stellung stellt die Trittplatte eine Trittfläche bereit, über welche eine Person das Fahrzeug betreten oder aus diesem aussteigen kann. Um eine solche Linearverschiebung der Trittplatte zu gewährleisten, kann die Trittplatte mittels einer Führung in einem fahrzeugseitigen Gehäuse oder einem Rahmen linearverschiebbar geführt sein. Schiebetritte erleichtern das Ein- und Aussteigen aus einem Fahrzeug, indem sie einen zwischen dem Fahrzeug und einem Haltesteig (z. B. einer Bahnsteigkante) vorliegenden Spalt überbrücken. Klapptritte (insbesondere rampenartig ausgebildete Klapptritte) sind insbesondere dazu vorgesehen, Höhenunterschiede zwischen einem Fahrzeuginneren (z. B. einem dort vorgesehenen Fußboden) und einem Haltesteig zu überwinden, können aber auch zur Überbrückung eines Spalts zwischen Fahrzeug und Haltesteig eingesetzt werden.

Schiebetritteinrichtungen werden in geschlossener Lage standardmäßig mithilfe einer Vorrichtung und/oder eines Sicherheitspositionsschalters verriegelt, damit sie während der Fahrt sicher verstaut sind. Im Fall einer Außerbetriebnahme des Fahrzeugs muss diese Verriegelung aufgehoben. Auch muss es möglich sein, die Trittplatte bzw. den Schiebetritt manuell in die Trittplattenanordnung hinein zu bewegen und dort zu sichern. Oftmals verriegelt die Trittplatte in der eingeschobenen Position selbsttätig. Abschließend ist es notwendig, das Verriegelungskontrollsignal des Schiebetritts mithilfe eines externen Schalters zu überbrücken.

Alternativ gibt es auch Außerbetriebnahmekonzepte, bei dem die Trittplatte nach dem manuellen Einschieben mithilfe eines Vorreibers verriegelt wird und diese Verriegelungsstellung mithilfe eines Schalters überwacht wird.

Die bisher bekannten Außerbetriebnahmekonzepte können jedoch nur eine sehr begrenzte Kraft aufnehmen und erfordern, dass sich das System bereits in geschlossener Lage befindet. Hinzu kommt oftmals auch, dass das System nicht ausreichend dicht geschlossen ist. Dies ist insbesondere bei Schnellzügen problematisch, da aufgrund der hohen Druckschwankungen, insbesondere in Tunneln, eine hohe Dichtigkeit des Systems ausgesprochen wichtig ist. Hinzu kommt, dass in vielen Fällen die Trittplatte eine Klappe der Schiebetritteinrichtung zuzieht, die von außen gegen die Tür oder den Türflügel dichtet. Im Fahrbetrieb wird die abdichtende Klappe durch die verriegelte Trittplatte in geschlossener, dichtender Lage gehalten. Auftretende Lasten an der dichtenden Klappe durch Druckschwankungen bzw. aerodynamischen Belastungen werden somit auf die Trittplatte und den Verriegelungsmechanismus der Zustiegshilfe übertragen.

Entsprechend liegt der vorliegenden Erfindung die Aufgabe zugrunde, eine Zustiegeinrichtung bereitzustellen, mit welcher eine einfache und sichere manuelle Überführung der Trittplattenanordnung in eine Ausserbetriebnahmeposition möglich ist. Die Zustiegeinrichtung soll in der Ausserbetriebnahmeeinheit sicher schließen und das Fahrzeug ausreichend abdichten.

Zur Lösung dieser Aufgabe wird eine Zustiegeinrichtung mit den Merkmalen des Anspruchs 1 vorgeschlagen.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Die Außerbetriebnahmeeinheit besteht also aus einer fest montierten Einheit, welche den sichelförmigen, drehbaren Hebel aufweist. An der Trittplatte bzw. am beweglichen Teil des Ausschubs befindet sich der Verriegelungbolzen, welcher durch Drehung des den Verrieglungsbolzen kontaktierenden Hebels in Richtung des Fahrzeugs gezogen werden kann. Der Hebel ist für diesen Zweck derart angeordnet, dass dieser den Verrieglungsbolzen bei Drehung des Hebels dann hintergreifen und diesen aufgrund der Positionierung der Drehachse des Hebels zum Verrieglungsbolzen und der Krümmung des Hebels in Richtung des Fahrzeugs ziehen kann, wenn der Verriegelungsbolzen ausrechend weit in die Trittplattenanordnung eingefahren ist. Die endseitige Drehachse des Hebels ist in einer bevorzugten Ausführungsvariante in Bezug auf die Verschiebeachse oder Verschieberichtung des Verriegelungsbolzens seitlich der Verschiebeachse angeordnet. Alternativ oder zusätzlich ist auch möglich, dass der sichelförmige Hebel keine gleichmäßige Krümmung aufweist, sondern sich diese in ihrem Verlauf ändert, beispielsweise zunimmt. Wesentlich ist, dass ein Drehen des Hebels ein Heranziehen des Verriegelungsbolzens bewirkt.

Durch die spezielle Kontur des Hebels können bei geringem Kraftaufwand erhöhte Widerstände z.B. durch Dichtungen überwunden werden. Bei vollständig geschlossener Lage, der Ausserbetriebposition wird ein Außerbetriebnahmeschalter aktiviert, der eine ordnungsgemäße Position der Trittplatte in der Zustiegeinrichtung oder ggfs. in einem Gehäuse der Zustiegeinrichtung signalisiert.

Die Trittplatte ist in der Ausserbetriebposition durch den Hebel formschlüssig gegen ein Verschieben in Ausfahrrichtung des Schiebetritts gesichert.

Aufgrund der Bauteildimensionierung kann das Außerbetriebnahmesystem in geschlossener Lage alle aerodynamischen Betriebslasten, welche durch die abdichtende Klappe übertragen werden, aufnehmen. Durch die hohe Belastungsfähigkeit des Außerbetriebnahmesystems kann dieses in die Sicherheitsschleife des Fahrzeugs eingebunden werden.

Durch die Drehung des sichelförmigen Hebels ist also ein Heranziehen der Trittplatte in die Ausserbetriebposition möglich. Die Drehung des Hebels kann dabei über einen von außen zugänglichen Kontaktbereich manuell erfolgen. Dieser Kontaktbereich kann beispielsweise durch eine aufrecht stehende Drehachse des Hebels gebildet sein, die von oben, also im Bereich des Fahrzeugbodens kontaktiert werden kann. Möglich ist beispielsweise eine Ausführung, die ein Ansetzen eines Werkzeugs ermöglicht, beispielsweise eines Schraubendrehers, eines Imbusschlüssels oder eines ähnliches Werkzeugs. Alternativ kann der Kontaktbereich derart ausgeführt sein, dass die Drehachse und damit der Hebel von Hand gedreht werden kann, beispielsweise mithilfe eines Drehrades.

Weiterhin ist es möglich, ein Federelement im Bereich der Drehachse vorzusehen, das entweder ein Drehen des Hebels in Richtung der Ausserbetriebposition oder ein Zurückdrehen des Hebels in die Ausgangsstellung unterstützt. Das Federelement dient auch dazu, eine rastende Stellung in geöffneter bzw. geschlossener Lage zu realisieren

Eine vorteilhafterweise vorgesehene Sperrklinke bewirkt, dass ein Drehen des Hebels in die Ausserbetriebposition dann nicht möglich ist, wenn der Hebel den Verrieglungsbolzen nicht hintergriffen hat. Dies ist dann der Fall, wenn die Trittplatte zu weit ausgefahren ist und der Hebel vor dem Verrieglungsbolzen an diesem vorbei gedreht wird.

Die Sperrklinke ist drehbar gelagert und kann eine Grundposition und eine Sperrposition einnehmen. In der Grundposition kann der Hebel den Verrieglungsbolzen der Trittplatte hintergreifen und diesen heranziehen. In der Sperrposition wird eine Drehung des Hebels durch die Sperrklinke verhindert. Ein Federelement bewirkt, dass sich die Sperrklinke dann in die Sperrposition bewegt, wenn diese nicht blockiert wird.

Der an der Trittplatte vorgesehene Verrieglungsbolzen bewirkt in Abhängigkeit seiner Position die Blockade der Sperrklinke. Wird die Trittplatte in Richtung des Fahrzeugs bewegt, kontaktiert der Verrieglungsbolzen die Sperrklinke an einer Seitenfläche und dreht diese in ihre Grundposition und hält sie anschließend in dieser Position. Wie bereits ausgeführt, ist es nur in dieser Position möglich, dass der Hebel den Verrieglungsbolzen hintergreifen und die Trittplatte heranziehen kann.

Befindet sich die Trittplatte dahingegen in einer ausgefahrenen Position, ist der Verrieglungsbolzen außer Eingriff mit der Sperrklinke. Die Sperrklinke wird durch einen Bolzen am sichelförmigen Hebel in Position gehalten. Wird der Hebel in dieser Situation gedreht, kommt er mit der Sperrklinke in Kontakt, wodurch ein weiteres Verdrehen in die Ausserbetriebposition verhindert wird. Dies wiederum verhindert auch, dass der Ausserbetriebnahmeschalter eine ordnungsgemäße Position der eingefahren Trittplatte erfassen und weitergeben kann. Dieses fehlende Signal kann somit also ein Fahren des Fahrzeugs mit ausgefallener Trittplatte verhindern..

In einer besonders bevorzugten Ausführungsvariante weist der Hebel an seinem freien Ende einen Hebelbolzen auf, der mit der Sperrklinke derart korrespondiert, dass die Sperrklinke die Drehbewegung des Hebels in Richtung der Ausserbetriebposition durch Kontakt mit dem Hebelbolzen blockiert.

Die Sperrklinke kann vorzugsweise eine Einbuchtung zur Aufnahme des Hebelbolzens aufweisen, die derart ausgeführt und angeordnet ist, dass der Hebel in seiner Drehbewegung in Richtung der Ausserbetriebposition dann in der Ausbuchtung aufgenommen und blockiert wird, wenn sich der an der Trittplatte angeordnete Verrieglungsbolzen außer Eingriff mit der Sperrklinke befindet und die sich Sperrklinke in ihrer Sperrposition befindet.

Die Sperrklinke ist in einer bevorzugten Ausführungsvariante in ihrer Grundposition derart angeordnet und ausgerichtet, dass die Einbuchtung in Einschubrichtung geöffnet und ihre Haupterstreckungsachse im Wesentlichen entlang der Verschiebeachse der Trittplatte ausgerichtet ist. Der an der Trittplatte angeordnete Verrieglungsbolzen ist in horizontaler Ebene seitlich versetzt zur Sperrklinke an der Trittplatte angeordnet, so dass dieser in Verschiebrichtung an der Sperrklinke und der Einbuchtung vorbei bewegbar ist. Ist die Trittplatte ausreichend weit eingeschoben, befindet sich der Verrieglungsbolzen in seiner zweiten und dritten Position seitlich der Seitenfläche der Sperrklinke, wodurch die Sperrklinke an einer Bewegung in die Sperrposition gehindert ist.

In ihrer Sperrposition befindet sich die Einbuchtung auf einer Bewegungsstrecke des Hebelbolzens und ist entgegen der Bewegungsrichtung des Hebelbolzens in seine Ausserbetriebposition geöffnet, so dass der Hebelbolzen in die Einbuchtung bewegbar ist.

Der Hebel kann in seinem hinteren, seiner Drehachse zugewandten Bereich vorzugsweise eine Halteeinbuchtung aufweisen, in der sich der Hebelbolzen in der Ausserbetriebposition befindet und dadurch in Verschiebrichtung der Trittplatte formschlüssig gesperrt ist. Diese Position kann der Hebelbolzen nur dann einnehmen, wenn die Bewegung nicht durch die Sperrklinke blockiert ist.

Die Formulierung, dass der Verrieglungsbolzen an der Trittplatte befestigt ist, schließt auch eine mittelbare Befestigung an der Trittplatte, beispielsweise an zusätzlichen Elementen der Trittplatte ein. Sinngemäß gilt das gleiche für den Hebelbolzen, der am freien Ende des Hebels befestigt ist.

Die Ausschubeinheit ist über eine geeignete Führung, beispielsweise eine Rollen- oder Schienenführung, in einer fahrzeugseitig vorgesehenen Führungsvorrichtung linearverschiebbar geführt. Auch die Trittplatte kann, beispielsweise unterseitig, über eine Führung, beispielsweise eine Rollen- oder Schienenführung, in einer fahrzeugseitig vorgesehenen Führungsvorrichtung linearverschiebbar geführt oder angeordnet sein. Die genannte Antriebseinheit ist vorzugsweise unmittelbar mit der Trittplatte oder einem daran befestigten Bauteil, beispielsweise einem Trittplattenträger verbunden. Aufgrund der zwischen Trittplatte und Ausschubeinheit bereitgestellten Wirkverbindung kann die Ausschubeinheit bei Linearverschiebung der Trittplatte entlang der Verschiebeachse mitgenommen werden, d.h. die Antriebseinheit kann eine Linearverschiebung der Trittplatte und der Ausschubeinheit entlang der Verschiebeachse, d.h. in Richtung der ausgefahrenen Stellung oder in Richtung der eingefahrenen Stellung bewirken. Zwischen Antriebseinheit und Trittplattenanordnung kann ein mechanisches Übertragungsmittel (z.B. ein Gestänge oder ein Antriebsriemen) vorgesehen sein, welches mit der Trittplatte, einem damit verbundenen Bauteil (z.B. einem Trittplattenträger) oder der Ausschubeinheit gekoppelt ist. Bei der Antriebseinheit kann es sich insbesondere um einen elektromotorischen Antrieb handeln. Die Verschiebung der Trittplatte und der Ausschubeinheit bei Ausführung der Verschiebebewegung der Trittplattenanordnung erfolgt gleichgerichtet und simultan. Die Verschiebung der Ausschubeinheit und Trittplatte erfolgt zudem in gleicher Geschwindigkeit.

Weitere vorteilhafte Ausgestaltungen einer erfindungsgemäßen Zustiegeinrichtung ergeben sich aus den in den Unteransprüchen angegebenen sowie den nachfolgend beschriebenen Merkmalen.

Weitere Merkmale und Vorteile der Erfindung ergeben sich aus der folgenden Beschreibung eines nicht einschränkend zu verstehenden Ausführungsbeispiels der Erfindung, welches im Folgenden unter Bezugnahme auf die Zeichnungen näher erläutert werden. In dieser Zeichnung zeigen schematisch:
- Fig. 1: eine perspektivische Ansicht eines ersten Ausführungsbeispiels einer erfindungsgemäßen Zustiegeinrichtung, wobei sich die zugehörige Trittplattenanordnung in einer teilweise ausgefahrenen Stellung befindet;
- Fig. 2: eine perspektivische Ansicht wesentlicher Bauteile der erfindungsgemäßen Zugstiegeinrichtung,
- Fig. 3: eine perspektivische vergrößerte Ansicht einer erfindungsgemäßen, ortsfest am Fahrzeug angeordneten Ausserbetriebnahmeeinheit;
- Fig. 4: eine perspektivische und vergrößerte Ansicht wesentlicher Bauteile der erfindungsgemäßen Zugstiegeinrichtung mit Sperrklinke in Grundposition von oben,
- Fig. 5: eine perspektivische und vergrößerte Ansicht wesentlicher Bauteile der erfindungsgemäßen Zugstiegeinrichtung mit Sperrklinke in Grundposition von unten mit eingedrehtem Hebel,
- Fig. 6: eine perspektivische und vergrößerte Ansicht wesentlicher Bauteile der erfindungsgemäßen Zugstiegeinrichtung in Ausserbetriebposition von oben,
- Fig. 7: eine perspektivische und vergrößerte Ansicht wesentlicher Bauteile der erfindungsgemäßen Zugstiegeinrichtung in Ausserbetriebposition von unten,
- Fig. 8: eine perspektivische und vergrößerte Ansicht wesentlicher Bauteile der erfindungsgemäßen Zugstiegeinrichtung mit Sperrklinke in Sperrposition von oben.

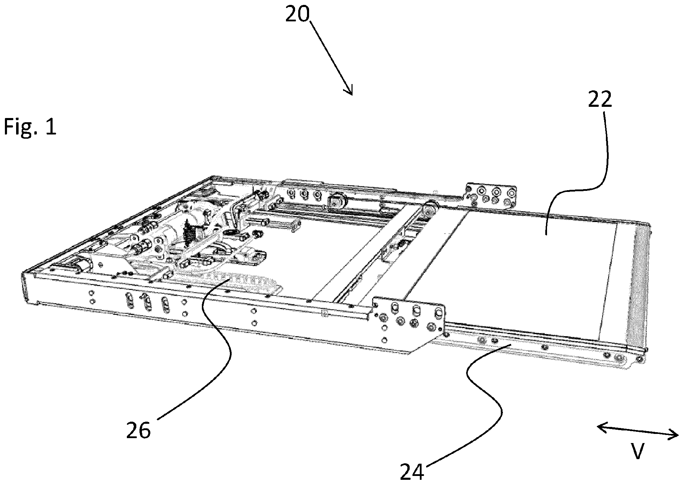

In Figur 1 ist in einer perspektivischen Ansicht ein erstes Ausführungsbeispiel einer erfindungsgemäßen Zustiegeinrichtung dargestellt. Die Zustiegeinrichtung wird als Ein- und Ausstieghilfe in einem nicht gezeigten Fahrzeug eingesetzt, bzw. ist in das Fahrzeug integriert. Insbesondere handelt es sich bei dem Fahrzeug um ein Schienenfahrzeug. In einem solchen Fahrzeug sind Zustiegeinrichtungen in der Regel im Seitenbereich des Fahrzeugs angeordnet, um Personen den Zustieg von einem seitlich des Fahrzeugs befindlichen Haltesteig zu ermöglichen.

Die Zustiegeinrichtung umfasst eine linearverschiebbar angeordnete Trittplattenanordnung 20, welche sich zusammensetzt aus einer Trittplatte 22 und einer mit der Trittplatte 22 wirkverbundenen Ausschubeinheit 24. Beim Ein- oder Aussteigen einer Person wird die Trittplatte 22 trittbelastet, d.h. mit der Gewichtskraft der Person beaufschlagt. Über eine Antriebseinheit 26 ist die Trittplatte 22 entlang einer Verschiebeachse V unter Ausführung einer Verschiebebewegung von einer eingefahrenen Stellung hin zu einer ausgefahrenen Stellung verschiebbar und umgekehrt. In Figur 1 ist die Trittplatte 22 ausgefahrener Stellung positioniert.

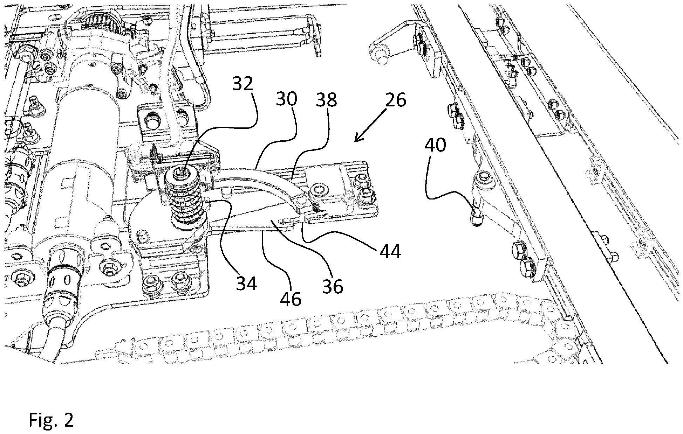

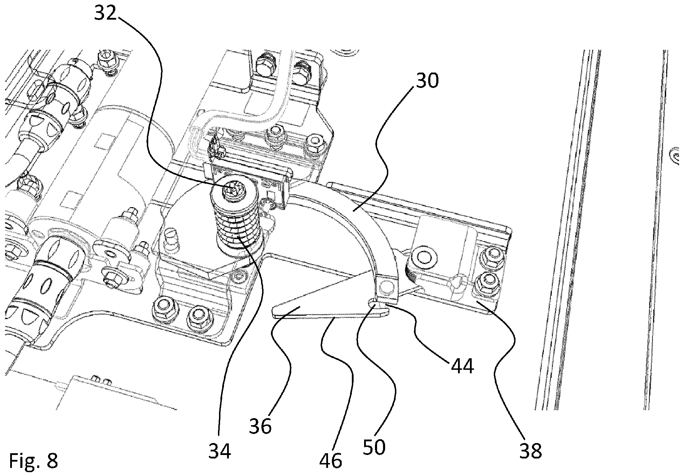

Figur 2 verdeutlicht den Aufbau der erfindungsgemäßen Zustiegeinrichtung mit ortsfest am Fahrzeug befestigter Ausserbetriebnahmeeinheit 28 mit einem sichelförmigen drehbaren Hebel 30, der von einer Betriebsposition (vgl. Fig. 1) in eine Ausserbetriebposition (vgl. Fig. 8) und zurück drehbar ist. Der Antrieb der Drehbewegung erfolgt dabei manuell über einen von außen zugänglichen Kontaktbereich 32, der im Bereich einer Drehachse des Hebels 30 angeordnet ist. Hierfür weist der Kontaktbereich 32 eine Aufnahme für einen Vierkantschlüssel auf.

In den Figuren ist erkennbar, dass der Kontaktbereich 32 bzw. die Drehachse des Hebels 30 mit einem Federelement 34 versehen ist, welches den Hebel 30 mit einer Federkraft beaufschlagt, die in Richtung der Betriebsposition des Hebels 30 wirkt. Das Federelement 34 bewirkt eine Rastung.

Weiterhin ist eine Sperrklinke 36 erkennbar, die ebenfalls drehbar und federbeaufschlagt an einem ortsfesten Träger 38 der Zustiegeinrichtung befestigt ist. Die Sperrklinke 36 ist von einer Grundposition (vgl. Fig. 2) in eine Sperrposition (vgl. Fig, 6) schwenkbar.

An der Trittplatte 22 ist ein Verrieglungsbolzen 40 vorgesehen, der mit der Trittplatte 22 entlang der Verschiebeachse V verschiebbar ist.

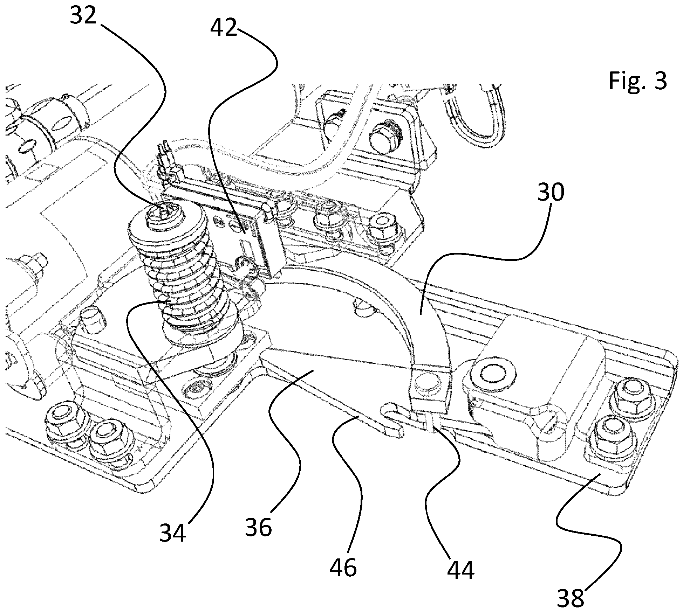

Fig. 3 zeigt eine perspektivische vergrößerte Ansicht der ortsfest am Fahrzeug angeordneten Ausserbetriebnahmeeinheit 28. Erkennbar ist ein Ausserbetriebnahmeschalter 42, der dann betätigt wird, wenn sich ein am freien Ende des Hebels 30 angeordneter Hebelbolzen 44 in der Ausserbetriebposition befindet. Der Ausserbetriebnahmeschalter 42 kann ein Signal erzeugen und weiterleiten, dass der Zugsteuerung eine ordnungsgemäße Ausserbetriebposition signalisiert.

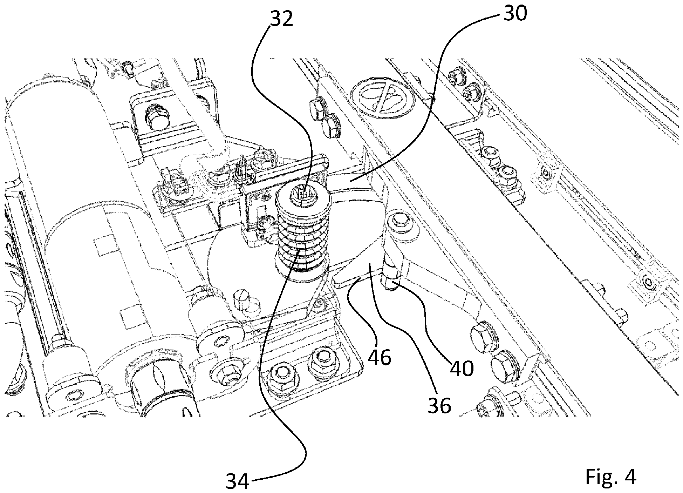

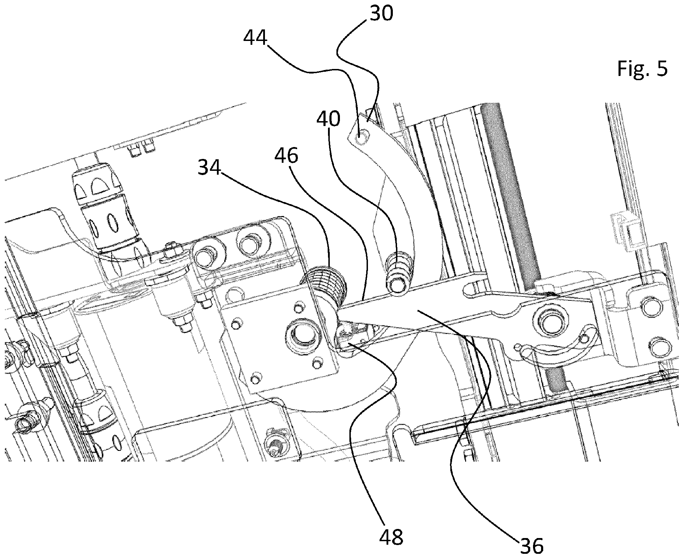

In den Figuren 4 und 5 ist die Trittplattenanordnung 20 in der Position gezeigt, in der sich die Sperrklinke 36 in ihrer Grundposition befindet. Figur 4 zeigt die Situation von oben, Figur 5 von unten. Erkennbar ist, dass der Verriegelungsbolzen 40 eine Seitenfläche 46 der Sperrklinke 36 kontaktiert und diese dadurch in ihrer Grundposition hält. Der Verrieglungsbolzen 40 kann entlang der Seitenfläche 46 verfahren werden. In dieser Position befindet sich die Trittplatte 22 ausreichend weit in der Trittplattenanordnung, sodass der Hebel 30 den Verrieglungsbolzen 40 hintergreifen kann (vgl. Figur 5). Durch Drehung des Hebels 30 wird der Verriegelungsbolzen 40 in Richtung des Fahrzeugs, also in die Trittplattenanordnung 20 hineingezogen.

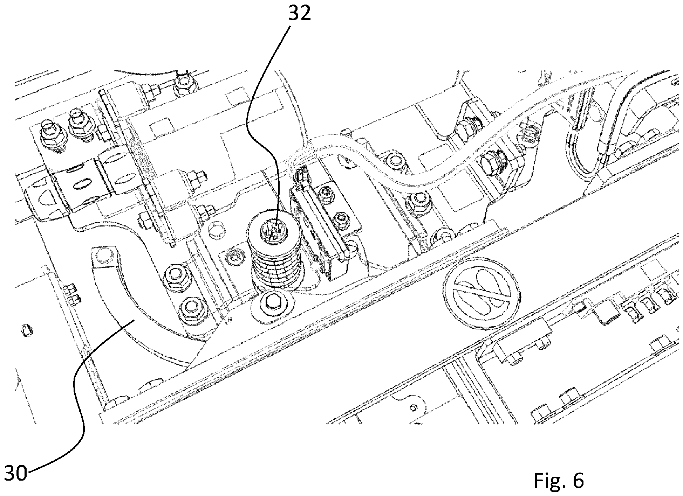

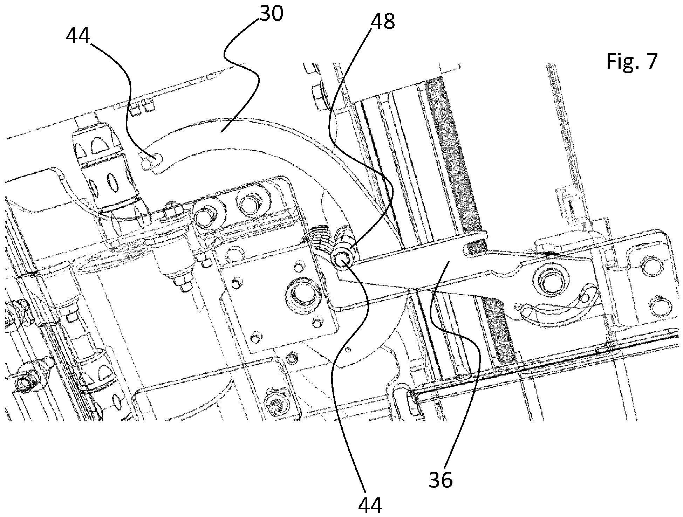

Die Figuren 6 und 7 zeigen die Situation, in der sich die Trittplattenanordnung in Ausserbetriebposition befindet. Erkennbar ist, dass sich der Verriegelungsbolzen 40 in einer Halteeinbuchtung 48 des Hebels 30 befindet. Die Halteeinbuchtung 48 hält den Verrieglungsbolzen 40 und blockiert ihn formschlüssig in gegen ein Ausfahren entlang der Verschiebeachse V.

Fig 8 zeigt die Sperrklinke 36 in Sperrposition von oben. Erkennbar ist, dass diese seitlich über den Träger 38 hinausgeschwenkt positioniert ist. Der Hebelbolzen 44 befindet sich in einer Einbuchtung 50 der Sperrklinke 36 und ist dadurch gegen ein Weiterdrehen in Richtung der Ausserbetriebposition gesichert. Somit ist ausgeschlossen, dass der Ausserbetriebnahmeschalter 42 eine korrekte Position des Haltebolzens erkennt, obwohl die Trittplatte 22 nicht ordnungsgemäß eingefahren ist.

Die Figuren verdeutlichen weiterhin, dass die Ausbildung und Anordnung des Hebels 30 und des Verrieglungsbolzen 40 derart gewählt sind, dass eine Drehbewegung des Hebels 30 ein Heranziehen des Verriegelungsbolzens 40 entlang der Verschiebeachse V bewirkt.

### Bezugszeichenliste

- 20: Trittplattenanordnung
- 22: Trittplatte
- 24: Ausschubeinheit
- 26: Antriebseinheit
- 28: Ausserbetriebnahmeeinheit
- 30: Hebel
- 32: Kontaktbereich
- 34: Federelement
- 36: Sperrklinke
- 38: Träger
- 40: Verrieglungsbolzen
- 42: Ausserbetriebnahmeschalter
- 44: Hebelbolzen
- 46: Seitenfläche
- 48: Halteeinbuchtung
- 50: Einbuchtung

- V: Verschiebeachse

## Patentansprüche

1. Zustiegeinrichtung für ein Fahrzeug, insbesondere für ein Schienenfahrzeug, umfassend eine Trittplatte (22) und einer mit der Trittplatte (22) wirkverbundenen Ausschubeinheit (24), in der die Trittplatte (22) entlang einer Verschiebeachse (V) unter Ausführung einer Verschiebebewegung von einer eingefahrenen Stellung hin zu einer ausgefahrenen Stellung und umgekehrt verschiebbar ist,
**gekennzeichnet durch**
- eine ortsfest am Fahrzeug befestigte Ausserbetriebnahmeeinheit (28) mit einem sichelförmigen drehbaren Hebel (30), der von einer Betriebsposition in eine Ausserbetriebposition und zurück drehbar ist,
- einen an der Trittplatte (22) angeordneten Verrieglungsbolzen (40), der dann von dem sichelförmigen drehbaren Hebel (30) hintergriffen und aufgrund einer weiteren Drehung des sichelförmigen drehbaren Hebels (30) entlang der Verschiebeachse (V) unter Ausführung einer Verschiebebewegung von einer ausgefahrenen Stellung hin zu einer eingefahrenen Stellung bewegt werden kann, wenn dieser ausrechend weit in die Trittplattenanordnung (20) eingefahren ist,
wobei
- der sichelförmige drehbare Hebel (30) in der Ausserbetriebposition befindet, wenn die Trittplatte (22) vollständig in die Trittplattenanordnung (20) eingefahren ist,
- die Trittplatte (22) in der Ausserbetriebposition durch den Hebel (30) formschlüssig gegen ein Verschieben in Ausfahrrichtung des Schiebetritts gesichert ist,
- der Hebel (30) über einen von außen zugänglichen Kontaktbereich manuell verdrehbar ist.

2. Zustiegeinrichtung nach Anspruch 1, **dadurch gekennzeichnet, dass** diese eine von einer Grundposition in eine Sperrposition schwenkbare Sperrklinke (36) aufweist, die derart angeordnet und ausgeführt sind, dass eine Drehbewegung des Hebels (30) in eine Ausserbetriebposition in der Sperrposition der Sperrklinke (36) gesperrt ist, wobei der Verrieglungsbolzen (40)
- in einer ersten Position, in der die Trittplatte (22) unzureichend weit in die Trittplattenanordnung (20) eingefahren ist, eine Bewegung der Sperrklinke (36) in die Sperrposition erlaubt, und
- in einer zweiten Position, in der die Trittplatte (22) weitgehend, aber noch nicht vollständig in die Trittplattenanordnung (20) eingefahren ist, die Sperrklinke (36) an einer Bewegung in die Sperrposition hindert und in der Grundposition hält, und
- in einer dritten Position, in der die Trittplatte (22) vollständig in die Trittplattenanordnung (20) eingefahren ist und sich der Hebel (30) in der Ausserbetriebposition befindet, die Sperrklinke (36) in der Grundposition hält und durch den Hebel (30) formschlüssig gegen ein Verschieben in Ausfahrrichtung des Schiebetritts gesichert ist.

3. Zustiegeinrichtung nach Anspruch 2, **dadurch gekennzeichnet, dass** die Sperrklinke (36) derart federbelstet ist, dass sich diese dann in Richtung der Ausserbetriebposition in die Sperrposition dreht, wenn sich der an der Trittplatte (22) angeordnete Verrieglungsbolzen (40) außer Eingriff mit der Sperrklinke (36) befindet.

4. Zustiegeinrichtung nach Anspruch 2 oder3, **dadurch gekennzeichnet, dass** der Hebel (30) einen Hebelbolzen (44) aufweist, der mit der Sperrklinke (36) derart korrespondiert, dass die Sperrklinke (36) die Drehbewegung des Hebels (30) in Richtung der Ausserbetriebposition durch Kontakt mit dem Hebelbolzen (44) blockiert.

5. Zustiegeinrichtung nach Anspruch 4, **dadurch gekennzeichnet, dass** die Sperrklinke (36) eine Einbuchtung (50) zur Aufnahme des Hebelbolzens (44) aufweist, die derart ausgeführt und angeordnet ist, dass der Hebel (30) in seiner Drehbewegung in Richtung der Ausserbetriebposition dann in der Ausbuchtung aufgenommen und blockiert wird, wenn sich der an der Trittplatte (22) angeordnete Verrieglungsbolzen (40) außer Eingriff mit der Sperrklinke (36) befindet und die sich Sperrklinke (36) in ihrer Sperrposition befindet.

6. Zustiegeinrichtung nach Anspruch 5, **dadurch gekennzeichnet, dass** die Sperrklinke (36) in ihrer Grundposition derart angeordnet und ausgerichtet ist, dass die Einbuchtung (50) in Einschubrichtung geöffnet und ihre Haupterstreckungsachse im Wesentlichen entlang der Verschiebeachse (V) der Trittplatte (22) ausgerichtet ist, und der an der Trittplatte (22) angeordnete Verrieglungsbolzen (40) in horizontaler Ebene seitlich versetzt zur Sperrklinke (36) an der Trittplatte (22) angeordnet ist, so dass dieser in Verschiebrichtung an der Sperrklinke (36) und der Einbuchtung (50) vorbei bewegbar ist und in seiner zweiten und dritten Position seitlich einer Seitenfläche (46) der Sperrklinke (36) angeordnet ist und dadurch die Sperrklinke (36) an einer Bewegung in die Sperrposition hindert und in der Grundposition hält.

7. Zustiegeinrichtung nach Anspruch 6, **dadurch gekennzeichnet, dass** die Sperrklinke (36) in ihrer Sperrposition derart angeordnet und ausgerichtet ist, dass die sich die Einbuchtung (50) auf einer Bewegungsstrecke des Hebelbolzens (44) befindet und entgegen der Bewegungsrichtung des Hebels (30) in seine Ausserbetriebposition geöffnet ist, so dass der Hebelbolzen (44) in die Einbuchtung bewegbar ist und die Sperrklinke (36) den Hebel (30) an einer Bewegung in seine Ausserbetriebposition hindert.

8. Zustiegeinrichtung nach einem der vorangehenden Ansprüche, **dadurch gekennzeichnet, dass** der Hebel (30) in seinem hinteren Bereich eine Halteeinbuchtung (48) aufweist, in der sich der Hebelbolzen (44) in der Ausserbetriebposition befindet und dadurch in Verschiebrichtung der Trittplatte (22) formschlüssig gesperrt ist.

9. Zustiegeinrichtung nach einem der vorangehenden Ansprüche, **dadurch gekennzeichnet, dass** der Hebel (30) über ein Federelement (34) federkraftbeaufschlagt ist, wobei die Federkraft entgegen der Bewegung in die Ausserbetriebposition wirkt.

10. Zustiegeinrichtung nach einem der vorangehenden Ansprüche, **dadurch gekennzeichnet, dass** ein Ausserbetriebnahmeschalter (42) vorgesehen ist, der dann betätigt wird, wenn sich der Hebel (30) in der Ausserbetriebposition befindet, wodurch der Ausserbetriebnahmeschalter (42) ein Signal erzeugt und weiterleitet, insbesondere an eine Zugsteuerung.

11. Zustiegeinrichtung nach Anspruch 10, **dadurch gekennzeichnet, dass** der Ausserbetriebnahmeschalter (42) die Position des Hebelbolzens (44) in Halteeinbuchtung (48) erfasst.

12. Zustiegeinrichtung nach einem der vorangehenden Ansprüche, **dadurch gekennzeichnet, dass** der Kontaktbereich (32) eine Aufnahme für ein Werkzeug, insbesondere für einen Vierkantschlüssel, einen Schraubendreher oder einen Imbusschlüssel aufweist.

13. Zustiegeinrichtung nach einem der vorangehenden Ansprüche, **dadurch gekennzeichnet, dass** der an der Trittplatte (22) angeordnete Verrieglungsbolzen (40) und der sichelförmige Hebel (30) derart zueinander angeordnet sind, dass eine Drehung des Hebels (30) ein Heranziehen des Verriegelungsbolzens (40) in Einschubrichtung der Trittplatte (22) bewirkt.
